# EUROPEAN PATENT SPECIFICATION

(11) **EP 1 785 684 B1**
(45) Date of publication and mention of the grant of the patent: **13.01.2010**
(21) Application number: 05746014.9
(22) Date of filing: 02.06.2005
(51) Int. Cl.: F27B 7/16, C22B 23/02, F26B 17/32, B01J 6/00

(54) **LIFTER FOR ROTARY HEAT EXCHANGER, ROTARY HEAT EXCHANGER WITH THE LIFTER, AND HEAT TREATMENT METHOD FOR NICKEL OXIDE ORE**
HEBER FÜR DREHWÄRMETAUSCHER, DREHWÄRMETAUSCHER MIT DEM HEBER UND WÄRMEBEHANDLUNGSVERFAHREN FÜR NICKELOXIDERZ
TIRANT D'EXTRACTION POUR ÉCHANGEUR DE CHALEUR ROTATIF, ÉCHANGEUR DE CHALEUR ROTATIF AVEC LE TIRANT D'EXTRACTION, ET PROCÉDÉ DE TRAITEMENT THERMIQUE DE MINERAI D'OXYDE DE NICKEL

(30) Priority: 08.06.2004 JP 2004169899
(43) Date of publication of application: 16.05.2007
(73) Proprietor: Pacific Metals Co., Ltd., Chiyoda-ku, Tokyo 100-0004 (JP)
(72) Inventor: SASAKI, Akira, c/o PACIFIC METALS CO., LTD., Hachinohe-shi, Aomori 031-8617 (JP); NAGASAWA, Hitoshi, c/o PACIFIC METALS CO., LTD., Hachinohe-shi, Aomori 031-8617 (JP); NAKAMURA, Yoshikatu, c/o PACIFIC METALS CO., LTD., Hachinohe-shi, Aomori 031-8617 (JP); ISHIBASHI, Masayuki, c/o PACIFIC METALS CO., LTD., Hachinohe-shi, Aomori 031-8617 (JP)
(74) Representative: Winter, Brandl, Fürniss, Hübner Röss, Kaiser, Polte Partnerschaft Patent- und Rechtsanwaltskanzlei
(86) International application number: PCT/JP2005/010116
(87) International publication number: WO 2005/121675

(56) References cited:
- DE-A- 237 140
- FR-A- 330 624
- GB-A- 613 176
- GB-A- 905 659
- JP-A- 4 281 186
- DATABASE WPI Week 197742 Derwent Publications Ltd., London, GB; AN 1977-74684Y XP002468417 & JP 52 105517 A (NIPPON MINING CO) 5 September 1977 (1977-09-05)

## Description

### FIELD OF THE INVENTION

The present invention relates to a lifter for a heat exchanging device, a rotary device equipped with the lifter and a method for heat treatment of nickel oxide ore, more particularly, to a lifter for improving the efficiency of heat exchange between raw material charged into a slightly inclined cylindrical shell and high temperature gas in contact with each other inside the rotating shell while the raw material travels from a charging side to a discharging one, and to a method for heat-treating the ore by making use of the above lifter.

### BACKGROUND ART

Ferronickel metal, auxiliary material for steel making, is obtained by smelting molten nickel metal after drying, calcining and melting the nickel oxide ore sequentially. The percentage of water content of the nickel ore is previously controlled before the ore is dried, preheated and calcined in a rotary kiln. The ferronickel metal is discharged from an electric furnace which refines the molten metal made from calcined nickel oxide ore separately from slag generated simultaneously.

Most of nickel oxide ore is mined in the moist zone such as the tropics or the subtropics, therefore, becoming weathered in pieces, finally becoming muddy and/or clayish. The nickel ore has to be dried and preheated in contact with hot gas flow before being calcined by thermal radiation of flames from a burner installed near a discharging port of a kiln. JP 52-105517 A describes the calcining of nickel oxide in a rotary kiln.

The rotary kiln is provided with a rotating shell that is slightly inclined downward so that the ore accommodated in the shell travels toward the port for discharging calcined matter. The ore lifted along the inner wall in response to the slow rotation of the shell repeats a cascade motion like an avalanche occurred over the angle of repose while traveling from a charging side to a discharging side. The hot gas generated by a burner combusting pulverized coal and/or oil is drawn toward the side for charging material by an induced draft fan equipped outside of the kiln, on the other hand, the ore charged into the shell is dried and preheated in contact with hot gas traveling toward the side for discharging calcined matter.

High percentage of water content in the raw material results in the need of a lot of gas and time besides a long processing zone for drying and preheating because the combustion gas generated in a kiln gradually falls in temperature in contact with the raw material successively. Sometimes a furnace exceeding e.g., 120 meters in length is required in order to achieve the desired capability for calcining raw material.

It is important to raise the temperature level of the gas passing through the zone for drying and preheating raw material in order to finish the process as soon as possible. However, the generation of higher temperature combustion gas increase the temperature of the exhaust gas to approximately 300°C which troublesomely exceeds the allowable temperature of a bag filter, a kind of dust collector. The combustion gas generated for the purpose of remaining the exhaust gas at a temperature less than 250°C cannot calcine the raw material sufficiently, resulting in increasing the operational load on an electric furnace in the case that the matter insufficiently calcined is charged into.

It should be noted that the heat exchange is effective only on the surface layer of raw material though it is agitated in the shell in response to the rotation of kiln in order to increase the opportunity of contact with hot gas. Moreover, though the height of raw material which the inner wall of a shell lifts always depends on the angle of repose corresponding to the current characteristic of the material, most of the gas merely passes through the space over the burden without the contribution to heat exchange in spite of the fact that the kiln is provided with lifter.

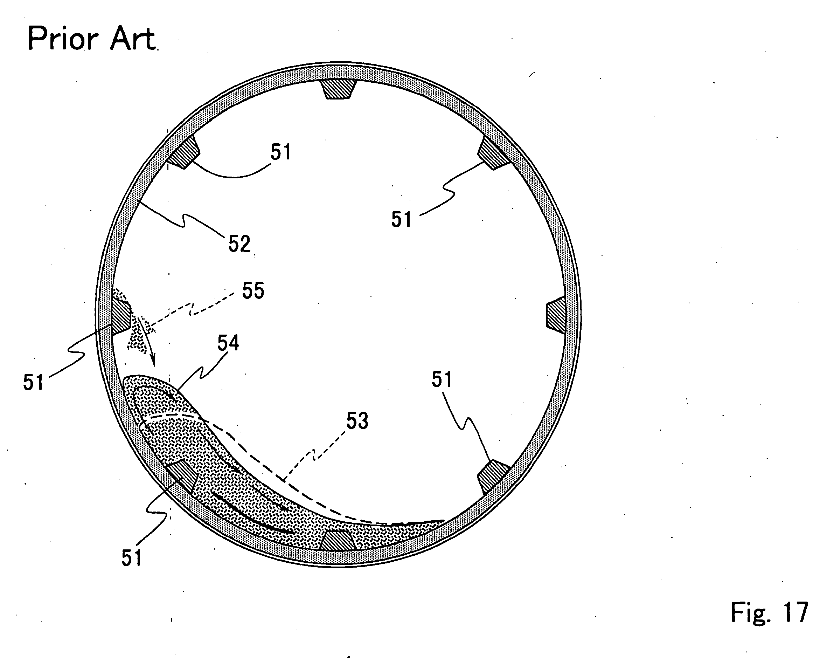

. JP63-35572B1 discloses several projections provided on the inner wall of the furnace in order to improve the transmission of the thermal energy of hot gas to raw material effectively. Fig.17 is a drawing according to the reference cited. Lifters 51 are projected from the surface of lining 52 for the purpose of expanding a surface of material layer 54 indicated by a solid line owing to delaying a surface avalanche of burden 53 shown by a broken line. A part of material 55 lifted by lifters 51 is scattered from a higher position so as to contact with the hot gas well all the while.□

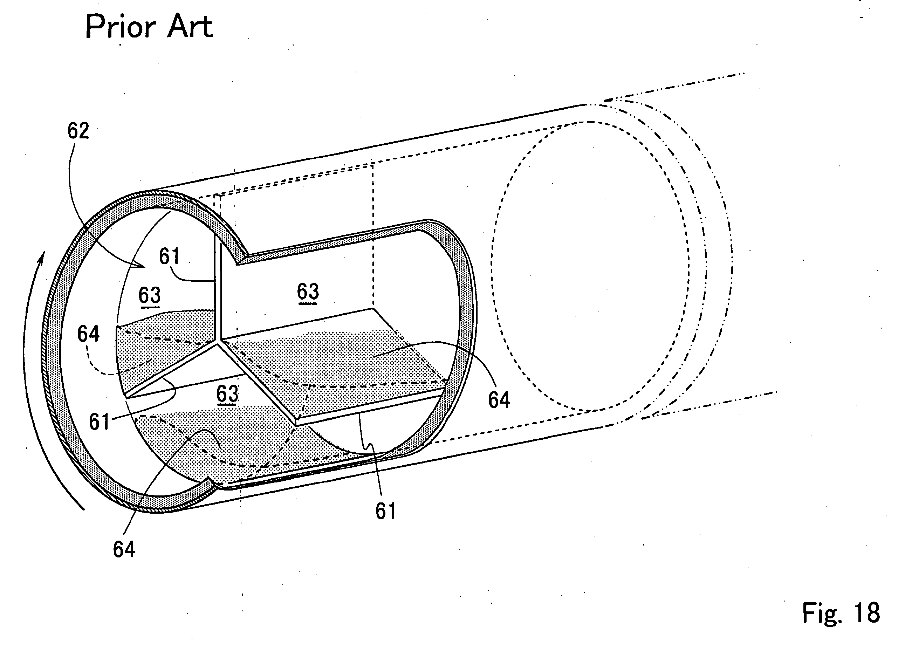

However, such lifters only enable raw material to contact with hot gas intermittently. A big space is still left over the burden, resulting in little improvement of heat exchange between raw material and hot gas. In JP52-57228A1 a lifter partitioning the cross-section of a kiln into several cells is disclosed as shown in Fig.18, comprising plates 61 extending in the direction of radius of a kiln from the center of a shell.

The lifter 62 comprising three plates is equipped in the zone for drying and preheating, transporting the material 64 lifted by every cell 63 to the zone for calcining one after another in response to sliding it violently on the plates inside the cells. The violent agitation of raw material in the cells improves the capability of heat exchange, resulting in raising the productivity of a rotary kiln.

According to the lifter, the raw material already dried, however, disturbs the contact of material still un dried with hot gas because most of the material just dried stays on the surface of burden. Since all of the narrow corners close to the intersection of plates are positioned at or near the center of a rotating shell, the raw material sticking on the corners is out of the influence of the centrifugal force caused by the rotation of a shell, resulting in hindrance to mixing itself and in decreasing the efficiency of heat exchange in the cells, especially, in the case where the percentage of water content of the material is very high. Furthermore, raw material sticking on plates chokes the path of hot gas, consequently, delaying the calcination of raw material in the zone for calcining occupying the latter half of the shell.

### DISCLOSURE OF THE INVENTION

### PROBLEM TO BE SOLVED BY THE INVENTION

The object of the invention is to provide a lifter for a heat exchanging device according to claim 1 and a rotary device equipped with the lifter in order to solve the problems mentioned above; the first is to increase the opportunity of contact of the whole of raw material with hot gas so as to achieve high efficiency of heat exchange, and so as to shorten the length of zone for drying and preheating in the rotary device as well; the second is to prevent raw material from sticking so as to keep the continuous agitation of raw material even if the percentage of water content of it is very high; the third is to maintain the temperature of the gas exhausted from the device for heat exchanging less than the temperature allowable for the operation of a gas purifier even when increasing the temperature of the combustion gas generated by a burner in order to raise the capability for calcining raw material; and the fourth is to lighten the operational load on an electric furnace often used in the succeeding process of heat exchange by increasing the temperature of combustion gas, on the whole, maintaining a stable operation of rotary device for heat exchanging, and achieving high productivity in running operation of a plant.

Another object of the invention is to provide a method for heat treatment of nickel oxide ore; the fifth is to increase the temperature of atmosphere in a kiln as high as possible near the port for charging ore so as to improve the capability for drying, preheating, pre-reducing and calcining nickel oxide ore by raising the level of temperature distributed in a rotary device on the whole; and the sixth is to decrease the temperature and the volume of gas exhausted from a rotary device so as to lighten the operational load on an electric precipitator even when increasing the temperature of the combustion gas.

### SUMMARY OF THE INVENTION

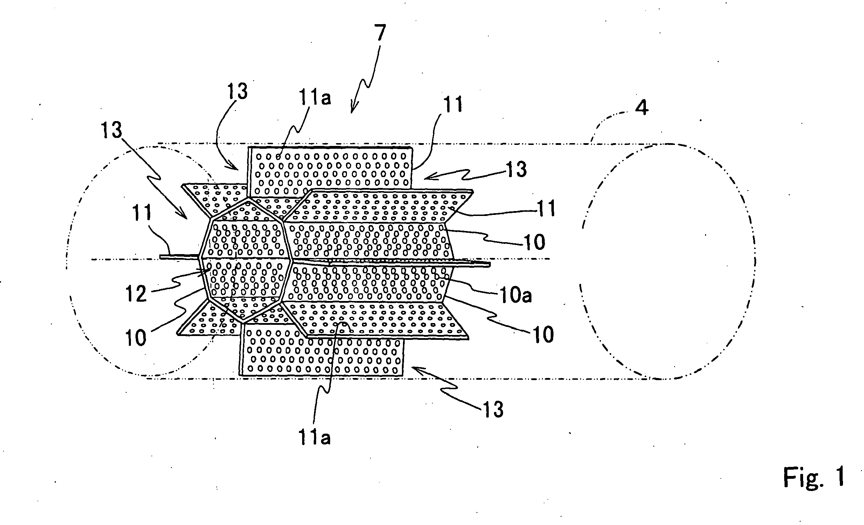

The present invention is applied to a lifter used in a rotary device for heat exchanging between raw material charged into a cylindrical shell and hot gas passing through the rotating shell toward a port for charging raw material in contact with each other while the raw material travels from a charging side to a discharging one, said device comprising with reference to Fig.1 - an inner cell 12 concentric with a shell 4, which has an opening equal to or more than one sixth (1/6) of the inner diameter of the shell at the inlet for raw material, and outer cells 13 formed by radial plates 11 dividing the space around the inner cell in the direction of circumference of the shell so that the whole of the cells are disposed at a certain position in the direction of the longitudinal axis of the shell 4.

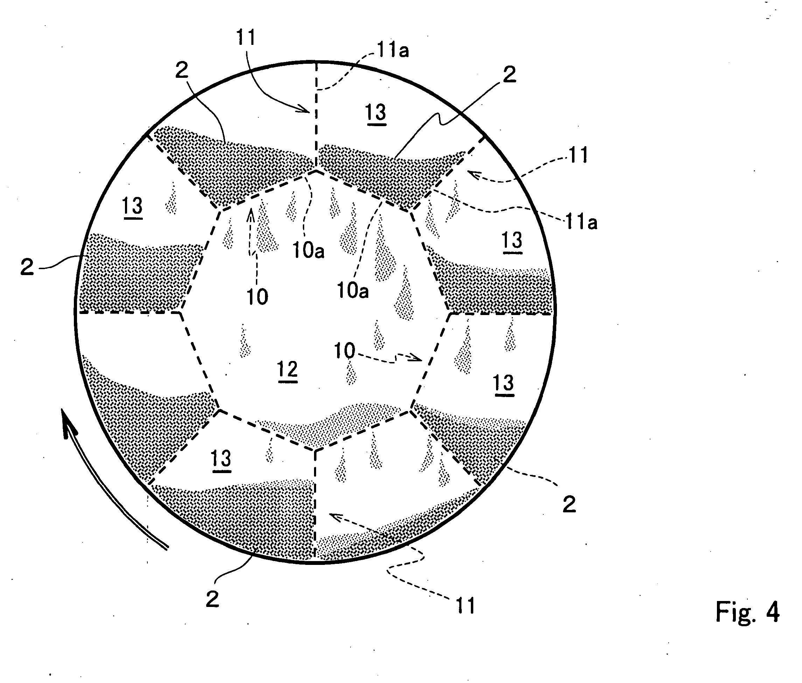

Tangential plates 10 can form the inner cell 12 and said plates may be made of panels with holes for sieving a part of raw material in every outer cell 13 into the inner cell 12. Radial plates 11 forming outer cells 13 can also be made of panels with holes for sieving a part of raw material in every outer cell 13 into its neighboring outer ones 13 (see Fig.4, too).

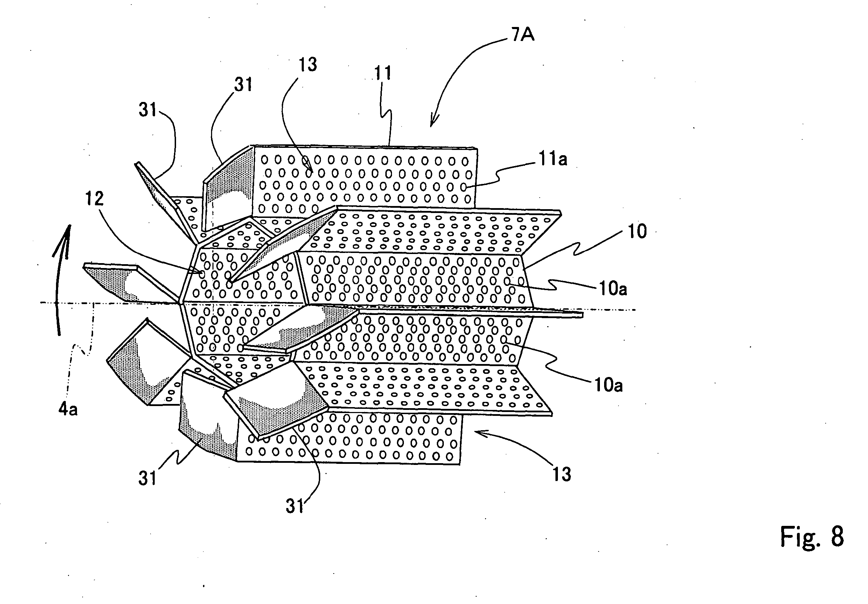

As shown in Fig.8, a lifter 7 may have a scraper 31 inclined against the axis 4a of the shell at the inlet for raw material of outer cell 13.

The lifter 7 may be fixed to the cylindrical shell 4 directly as shown in Fig. 3. It may also be equipped with a carriage 32B and 32C so that the lifter assembly can be slide into the cylindrical shell 4 as shown in Fig. 10 and Fig. 11.

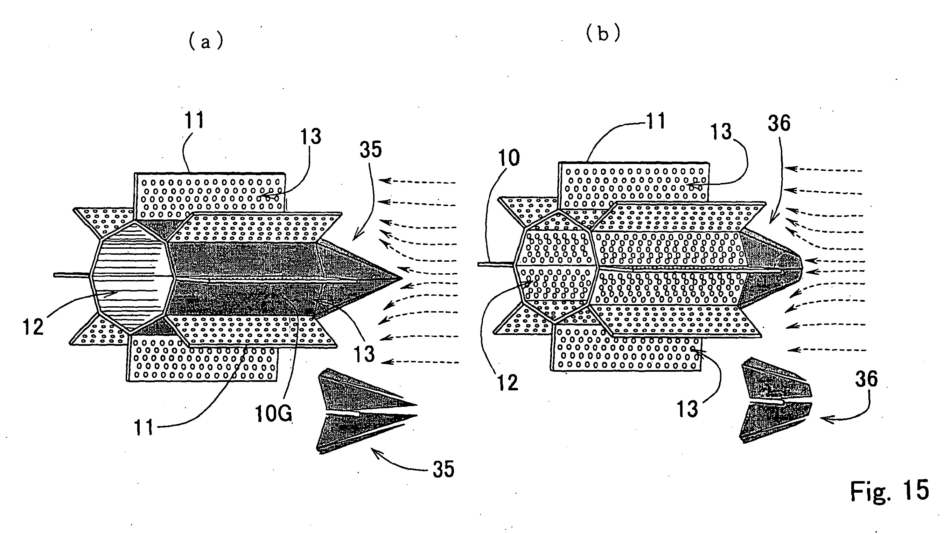

As shown in Fig.15(a), the lifter 7 may be provided with cover 35 closing the opening of the inner cell 12 and guiding the whole of hot gas into the outer cells 13. As shown in Fig.15(b), a set of movable conical blades 36 is provided at the outlet for raw material of the inner cell 12 so as to change the distribution of flow rate of the hot gas passing through both inner cell 12 and outer cells 13.

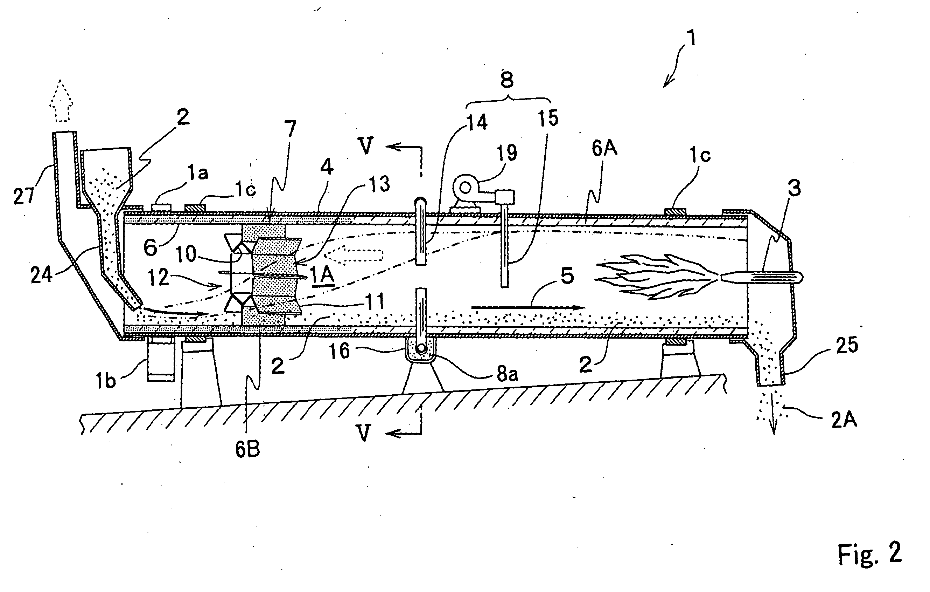

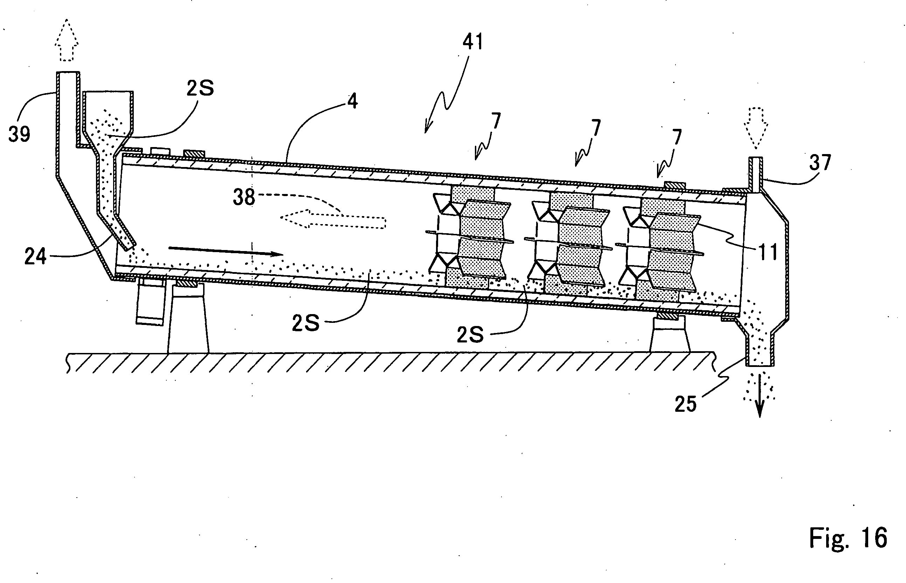

The lifter may be installed in a rotary device for heat exchanging, which is used practically as a rotary kiln 1 (see Fig.2), a rotary dryer, not shown, and a rotary drum 41 for recovering heat energy shown in Fig.16. A rotary kiln may be provided with an additional firing device 8 (see Fig.2) between a lifter 7 and a burner 3, being different from the other two rotary devices.

A method for heat treatment of nickel oxide ore according to the present invention is applied to a method for drying, preheating and calcining nickel ore wherein wet nickel ore charged into a cylindrical shell is in contact with hot gas passing through the rotating shell while the ore travels from a charging side to a discharging one, the method comprising - with reference to Fig.2 - a first step for drying and preheating nickel oxide ore 2 in contact with hot gas reaching the downstream region of ore travel, wherein the nickel ore is moved in the direction of rotation of the cylindrical shell by both tangential plates 10 extending in the direction of longitudinal axis of the shell to form the periphery walls of an inner cell 12 concentric with the shell 4 and radial plates 11 dividing the space around the inner cell in the direction of circumference of the shell to form outer cells 13; a second step for roasting carbonic material 8a in contact with hot gas passing through the region of mid passage not only to prevent the hot gas from decreasing in temperature but to make reducing atmosphere, resulting in heating and pre-reducing nickel oxide ore 2; and a third step for calcining the nickel oxide ore 2 in contact with combustion gas generated by a burner 3 provided near a port for discharging the calcined matter of the cylindrical shell 4.

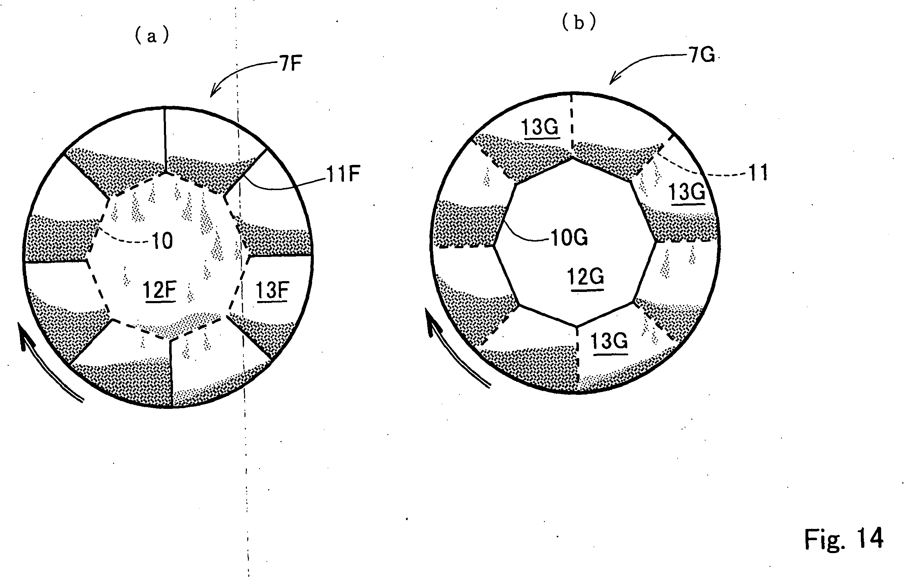

As shown in Fig.14 (a), tangential plates 10 may be made of panels with holes so as to sieve a part of ore in every outer cell 13F into an inner cell 12F therethrough, resulting in drying quickly the ore left in the outer cell 13. Otherwise, as shown in Fig.14 (b), radial plates 11 can be made of panels with holes so as to sieve a part of ore in every outer cell 13G into its neighboring outer cells, resulting in quickly drying the ore left in the outer cell.

### EFFECT OF THE INVENTION

According to the present invention, a lifter can be provided with not only an inner cell extending concentrically in the direction of longitudinal axis of a shell and having an opening equal to or more than one sixth of the inner diameter of the shell but also outer cells formed by dividing the space around the inner cell in the direction of circumference of the shell at a certain position inside the cylindrical shell. The rotation of outer cells apart from the center of the shell prevents raw material from sticking on the walls of cells even when the material is very wet, resulting in activating the behavior of raw material in the outer cells. The increase in the opportunity of contact of raw material with hot gas remarkably improves the efficiency of heat exchange.

The tangential plates made of panels with holes, forming the inner cell, sieves the raw material dried in every outer cell into the inner one so that the raw material left in the outer cells is dried and preheated more quickly. The raw material sieved through the holes is dried and preheated much more quickly by hot gas passing through the inner cell, therefore, being transferred a lot of heat energy from the gas flow.

The radial plates made of panels with holes sieves the raw material dried in every outer cell into its neighboring outer ones so that the raw material left in the original outer cell is heated by the energy of hot gas to dry and to preheat itself only in high efficiency. The raw material sieved through the holes into its neighboring outer cells is further dried and preheated by hot gas passing through the outer cells, resulting in decreasing the temperature of gas exhausted from the device for heat exchanging.

A scraper inclined against the axis of the shell provided at the inlet for raw material of every outer cell gathers a part of raw material charged into the shell so as to lead it to its own outer cell smoothly. The space at the back of scraper provides a reservoir for accumulation of raw material just charged as a burden for the next outer cell, accordingly, preventing raw material from heaping just before the inlets for each outer cells.

Castable refractory additionally used to cover the inner wall of the shell is also used to cover the part where a lifter is fixed on the cylindrical shell, resulting in protecting the base of the lifter from thermal attack caused by the gas flow. The stable motion of the lifter according to the rotation of the shell restrains the lifter from deforming and vibrating in response to the movement and/or the behavior of raw material. Mounting a set of carriage on a lifter makes the lifter assembly install on and/or remove from the cylindrical shell easily so that a lifter can be exchanged very quickly in the renewal work.

A cover which is fixed to close the opening of an inner cell not only guides hot gas to outer cells but checks the gas flowing toward the inner cell, resulting in increasingly improving the effect of drying and preheating raw material agitated in outer cells. Decreasing the gas volume corresponding to the flow rate of hot gas passing through the inner cell that does not contribute to heat exchange substantially means saving the operational energy spent in a rotary device for heat exchanging.

A set of movable conical blades provided at the outlet for raw material of the inner cell so as to change the distribution of flow rate of hot gas flowing into both inner cell and outer cells not only increases the flow rate of hot gas supplied to the outer cells but decreases the hot gas supplied to the inner cell. This means that the oversupply of hot gas into the inner cell can be avoided because the raw material in the inner cell is few, already dried and only floating and/or precipitating.

A lifter provided in a rotary device for heat exchanging shortens the length of zone for drying and preheating in response to the improvement of efficiency of heat exchange therein, accordingly, also shortening the overall length of the rotary device. Moreover, a decrease in temperature of gas after heat exchanging in high efficiency helps to decrease the volume of gas exhausted from the rotary device, resulting in lightening the operational load on an equipment for purifying the exhaust gas. The decrease in temperature of exhaust gas allows the increase in temperature of the combustion gas just generated, further facilitating heating of the raw material. In the case where an electric furnace is used in the succeeding process of heat exchange, further heating of the raw material in the rotary device contributes to lighten remarkably the operational load on the electric furnace, with the consequence of maintaining a stable operation of the rotary device for heat exchanging, and besides, achieving high productivity in the running operation.

A rotary kiln assigned to the rotary device for heat exchanging as mentioned above has the potential to make the temperature for calcining raw material higher, thus, it accelerates drying and preheating of raw material in contact with hot gas at a higher temperature passing therethrough. An additional firing device provided between a lifter and a kiln burner can heat the hot gas passing through the region of mid-passage with falling in temperature compared with the combustion gas just generated by a burner, accordingly, resulting in raising the level of temperature distributed in the whole of a long kiln. Higher temperature maintained in the hot gas promotes drying and preheating of raw material at or near the port for charging raw material.

A rotary dryer assigned to the rotary device for heat exchanging mentioned above can be shortened by means of a lifter contributing to high efficiency in heat exchange, and consequently, the size of plant facilities including a dryer can be also smaller. Moreover, the energy required for operating a rotary dryer is saved because raw material is dried well in spite of the fact that the temperature of gas contacting with it is not very high. Though a rotary dryer is one of the industrial machines widely used in the stage of pre-treatment process of various plants, the lifter can be additionally equipped with even an existing dryer to improve the capability of heat exchange.

A rotary drum assigned to the rotary device for heat exchanging mentioned above recovers the heat energy of shapeless matter in high temperature through the air in contact with it. A lifter accelerates an initial rise in temperature of the air for recovering the heat energy of shapeless matter in high temperature, e.g., slug just discharged from a furnace equipped in a metal-making plant.

In line with the method for heat treatment of nickel oxide ore according to the invention, roasting of carbonic material fed into the hot gas already used for calcining nickel oxide ore not only prevents the hot gas from decreasing in temperature but makes reducing atmosphere to promote the preliminary reduction of nickel oxide ore. The gas with little decrease in temperature reaching a lifter dries and preheats effectively even oxide ore with a high percentage of water content before calcining it since the lifter always agitates the ore.

The tangential plates made of panels with holes sieve a part of the ore in every outer cell into an inner one so that the ore in the inner cell can be preheated well in contact with hot gas passing therethrough. Most of the energy of the hot gas is used for heat exchange of the ore which is not dried easily and quickly, i.e., it is quite available not only to vaporize the water contained in the ore but to preheat the ore in outer cells. The higher the temperature for preheating ore rises, the higher that for burning carbonic material rises, thereby, the volatile matter included in carbonic material is favorably burned out.

The radial plates made of panels with holes sieve a part of the ore in every outer cell into its neighboring outer cells so that even ore which is not dried easily and quickly has an early opportunity for heat exchanging in outer cells. The heat energy increases in the outer cells in response to the transfer of ore already dried so that the ore in the outer cells is dried and preheated enough to be pre-reduced before being calcined.

### BRIEF DESCRIPTION OF DRAWINGS

Fig.1 is a schematic view of a lifter used in a rotary device for heat exchanging according to the present invention.
Fig.2 is a longitudinally sectional view of a rotary kiln equipped with a lifter.

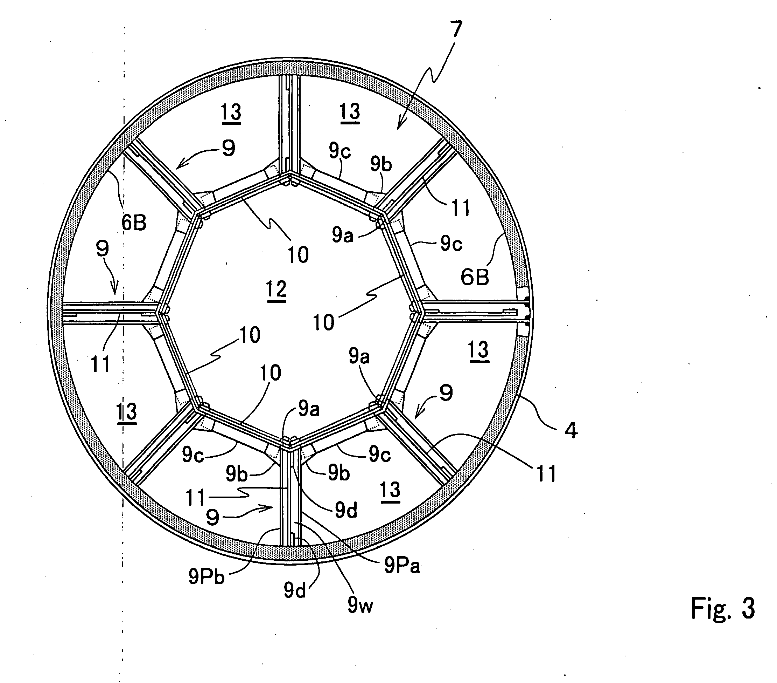

Fig.3 is a sectional view of the structure of a lifter installed on the shell.
Fig.4 is a sectional view for showing the state of the agitation of wet ore and fall of the dried ore into other cells.

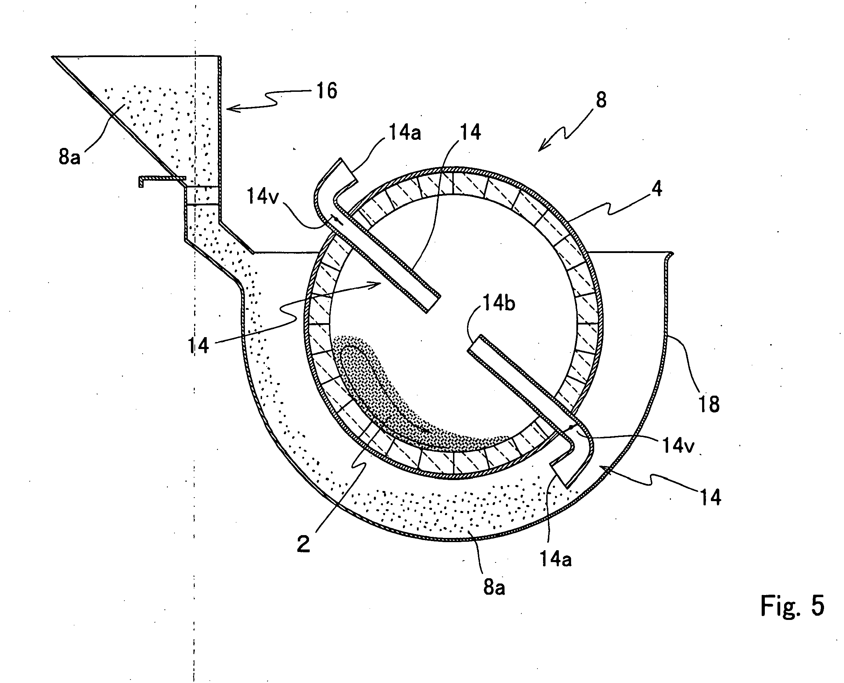

Fig.5 is an enlarged sectional view of the additional firing device mounted on a kiln taking along line V-V in Fig.2.

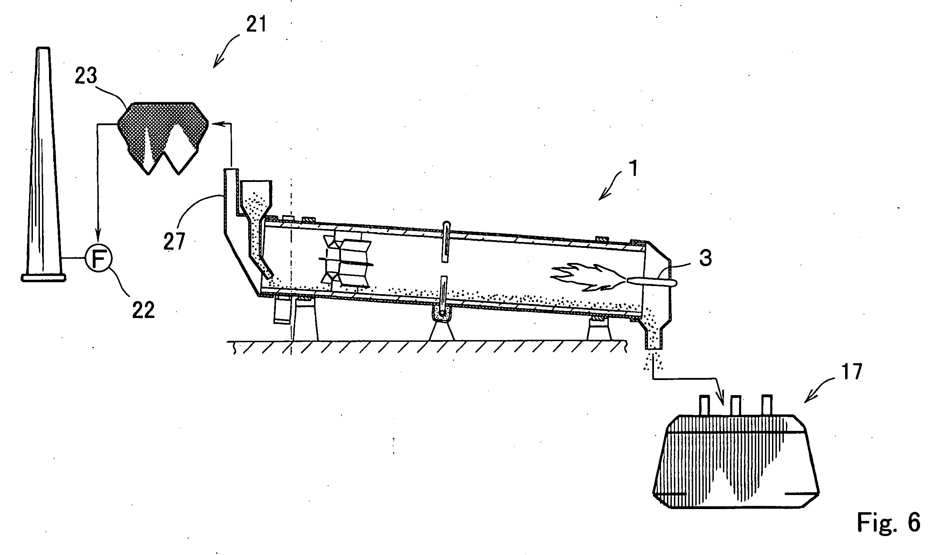

Fig.6 is a schematic view of the whole of a plant for refining nickel oxide ore.

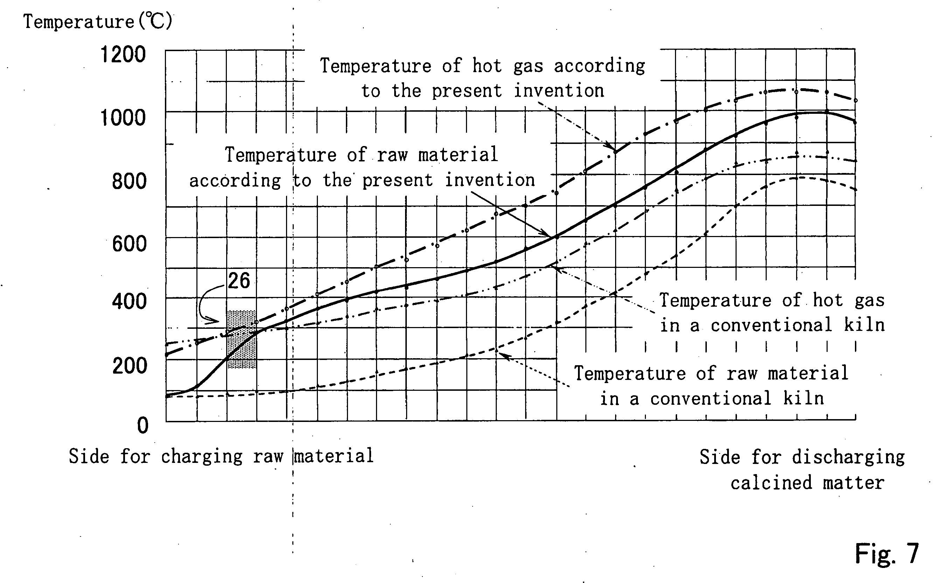

Fig.7 is a diagram showing the temperature distribution of hot gas and raw material in a rotary kiln.
Fig.8 is a schematic view of a lifter having scrapers.

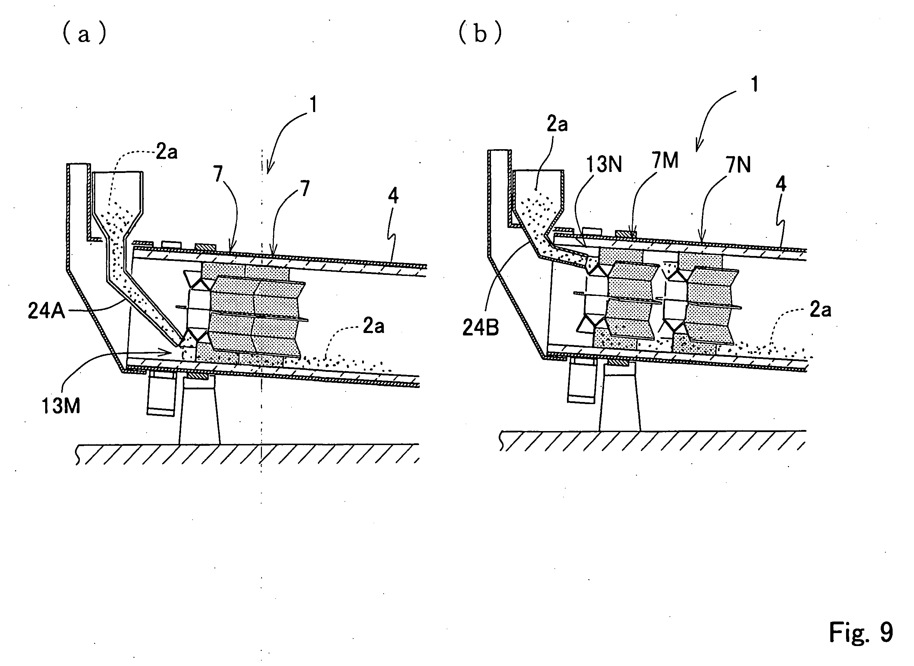

Fig.9 (a) and (b) are partial schematic views of the side for charging raw material in kilns with feeders different from each other.

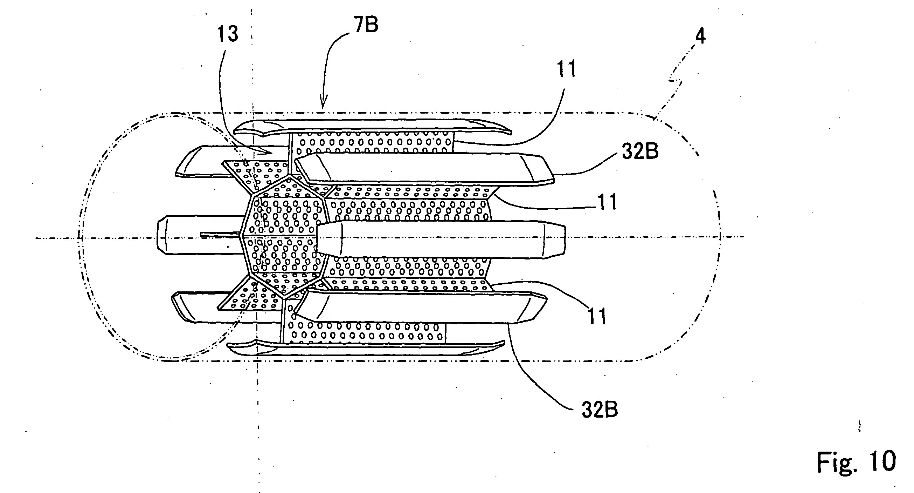

Fig.10 is a schematic view of a lifter provided with skids.

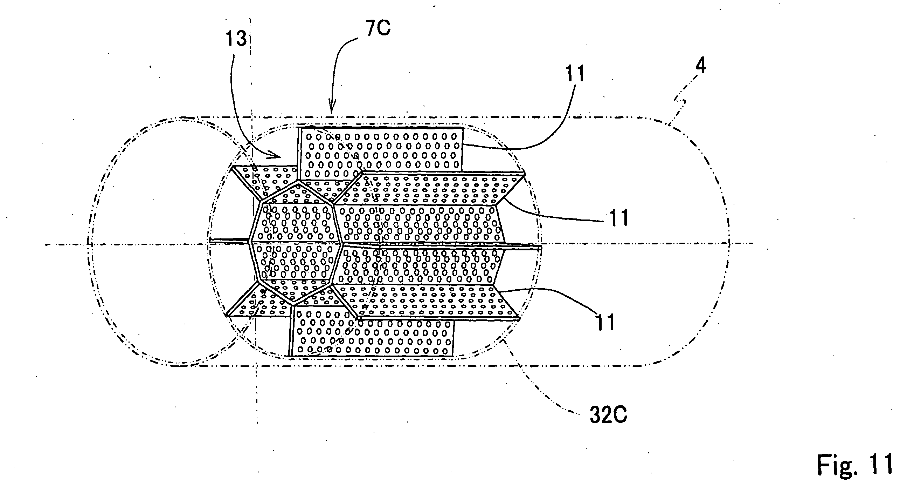

Fig.11 is a schematic view of a lifter assembled in a supporting drum.

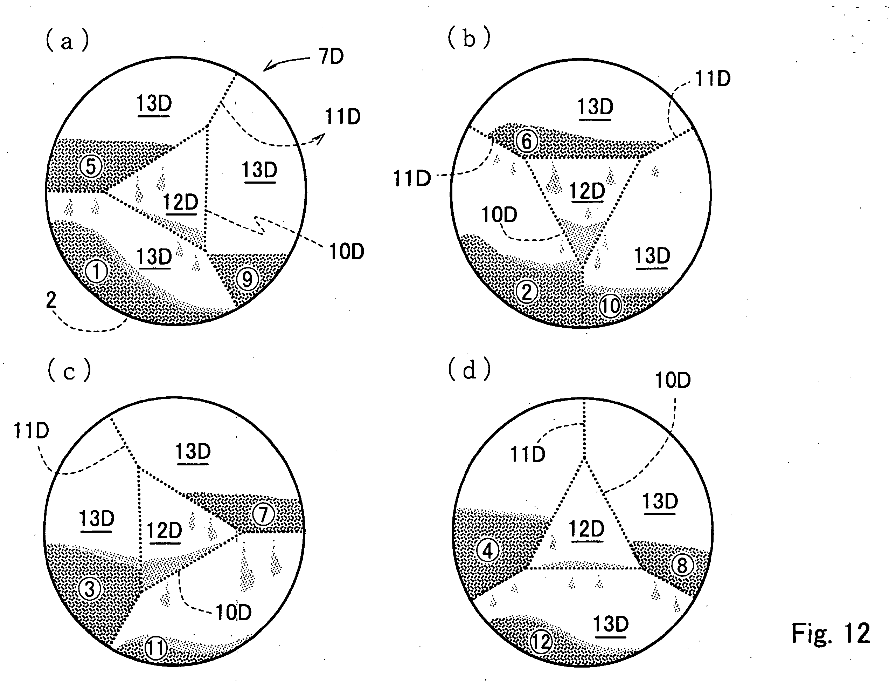

Fig.12 is a schematic view of the behavior of raw material inside a lifter having three outer cells.

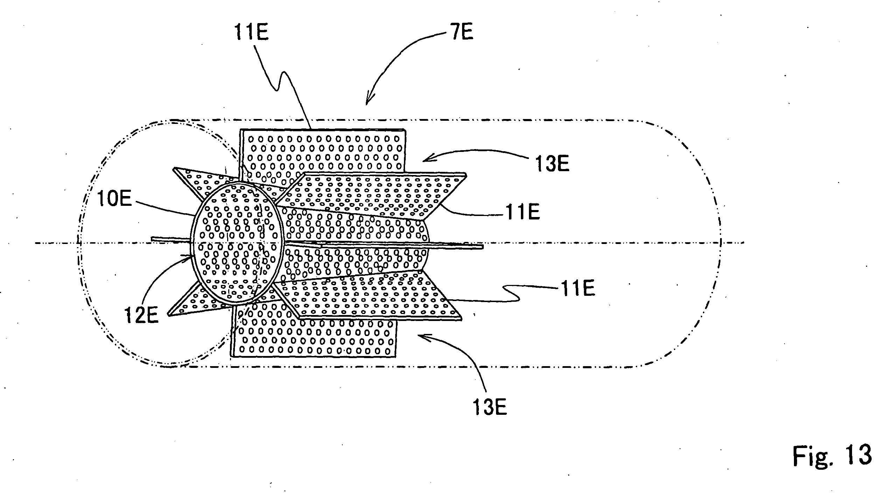

Fig.13 is a schematic view of a lifter having a conical inner cell.
Fig.14 (a) and (b) are schematic views of the lifters having radial plates or tangential plates made of panel without hole.
Fig.15 (a) is a schematic view of a lifter provided with a cover to close the opening of an inner cell and (b) is a schematic one with movable conical blades to change the distribution of flow rate of hot gas passing through both inner cell and outer cells.
Fig.16 is a longitudinally sectional view of a rotary drum for recovering heat energy.
Fig.17 is a sectional view for showing the behavior of raw material in a kiln with lifters belonging to prior art.
Fig. 18 is a sectional view of the shell partitioning the cross section thereof into several cells belonging to prior art.

### PREFERABLE EMBODIMENT OF THE INVENTION

With reference to the drawings, a lifter for a heat exchanging device, a rotary device equipped with the lifter and a method for heat treatment of nickel oxide ore are disclosed as follows: Fig.2 shows a rotary kiln 1 according to the present invention, for drying, preheating and calcining nickel oxide ore 2 charged into the kiln in contact with the combustion gas generated by a burner 3 before the calcined matter is smelted in an electric furnace, i.e., the ore 2 as raw material charged into a slightly inclined cylindrical shell 4 is contacted with hot gas for heat exchange while traveling from a charging side to a discharging side inside a shell in the direction of an arrow 5.

The rotary kiln 1 provided with a shell 4 having a ring gear 1a which engages with a pinion 1b driven by a motor, not shown, rotates at 1 to 10 rpm, while being supported by tires 1c provided at the fore and rear of the shell. The kiln is not different from an existing one at the point that the inner wall of shell 4 is covered with refractory bricks 6A and/or castable refractory 6B and that a burner 3 is provided on the side for discharging calcined matter 2A. However, it should be noted that a lifter 7 and an additional firing device 8 are provided in the shell as described below, particularly, the lifter is quite different from an existing one, resulting in further improvement of the efficiency of heat exchange of ore in contact with hot gas.

The lifter 7 comprises mainly columns 9, tangential plates 10 and radial plates 11 as shown in Fig.3. The plates 10 and 11 form both an inner cell 12 and outer cells 13 as explained later. Columns 9 extend in the direction of radius of the shell, of which base is welded on the inner wall of cylindrical shell 4 directly (referring to the part locally broken on the right hand side of the shell in Fig.3). The lifter 7 is disposed at a certain position in the direction of the longitudinal axis of the cylindrical shell 4, particularly in the embodiment of Fig.2 - it is being assembled in the zone 1A for drying and preheating ore, i.e., near the starting point of ore transporting.

The lifter 7 is provided with two sets of eight columns 9 disposed at some span along the longitudinal axis of the shell, wherein the first one only is shown in Fig.3. Each column 9 is a welded H-shaped assembly comprising three flat plates, accompanying connecting beams 9c bolted on top plates 9a shaped in V-form and brackets 9b welded thereon, thereby, keeping a shape of the lifter. Flanges 9Pa and 9Pb perpendicular to a web 9w are different from each other in width so as to easily fix radial plates 11 to the columns 9.

The tangential plates 10 forming the boundaries between the inner cell 12 and the outer cells 13 are fixed on top plates 9a and connecting beams 9c by stiffening plates cooperating with bolts, resulting in the octagonal inner cell 12 where hot gas passes through, and which is formed concentrically with the shell. The opening size of the inner cell 12 on the side for charging raw material is assigned to be equal or more than one sixth of the inner diameter of the shell, in particular, of the distance between opposite surfaces of the lining according to reasons described later.

The radial plates 11 are fixed to upper fittings 9d and lower ones 9d on the columns by stiffening plates cooperating with bolts. The radial plates are mounted from the side of flange 9Pb which is smaller in width than the other flange 9Pa so as to bridge columns 9 and 9 disposed along the axis of the shell. Such radial plates 11 form eight outer cells 13 by dividing the space around the inner cell 12 in the direction of circumference of the shell.

In the case that an inner diameter of lining of the rotary kiln 1 is 4.8 meters , the diameter of the opening of inner cell 12 is assigned to be more than 80 centimeters, for instance. A small opening of the inner cell makes the outer cells 13, which are partitioned by the radial plates 11, large, however, it results in forming narrow corners near the center of the shell. It is desirable to activate the behavior of ore in the layer so as to mix the ore charged into the kiln smoothly since the ore is still high-aggregative though the percentage of water content of the nickel oxide ore is controlled to be less than 25% before charging into the kiln.

The opening is assigned to be equal to or greater than one sixth of the inner diameter of the shell so that the ore in the outer cells 13 is favorably affected by the centrifugal force caused by rotation of the shell, which results in preventing the ore from stagnating in a layer and from sticking on the plates near the center of the shell.
The opening assigned to a half of the inner diameter of the shell as shown in Fig.3 facilitates to ensure a flow rate of hot gas which is required for drying and preheating to the inner cell, and to provide the strength and rigidity of the lifter which is required for lifting ore in the direction of circumference of the shell.

Though the section of the kiln is divided into 9 spaces including the inner cell 12, every space ensures the hot gas passes therethrough smoothly. The panels 10 and 11 forming cells have a lot of holes 10a and 12a as shown in Fig.1, of which diameter is, e.g., 20 millimeters. Such panels with holes for sieving a part of the ore in every cell may be punched metal sheets 5 to 10 millimeters thick though it is required to renew them during maintenance work in order to provide for the unavoidable wear of panels caused by the violent behavior of the ore.

The tangential plates 10 which extend in the direction of longitudinal axis of the shell, as shown in Fig.4, sieve a part of already dried ore and/or small ore in every outer cell 13 into the inner cell 12, and the radial plates 11 sieve them into their neighboring outer cells 13. The contact of the hot gas and the un-dried nickel ore mixing with one already dried results in delay of drying and preheating the still un-dried ore since the percentage of water content of nickel oxide ore is originally very high in general. Consequently, according to the embodiment the dried ore and small grain can be removed as much as possible so as to improve the efficiency of heat exchange against the large and/or aggregated still un-dried ore.

The lifter 7 is fixed by welding the column 9 to the cylindrical shell 4, as shown in Fig.3; the pedestals of the column are covered with the castable refractory 6B or fire mortar which can be used also for lining the inner wall of the shell so that the lifter can always display high durability. The cross sectional profile assigned to the lifter contributes favorably for promoting the structural stability against the load and its fluctuation and the vibration acting on the lifter, resulting in the structure of the lifter which is able to run long in operation except for the wear and/or damage of panels. Plural cells not only promote the distribution of the ore but allows an increase in the amount of the ore charged into the kiln. The work to maintain and/or to repair the lifter is so easy that it can be accomplished within the ordinary periodical maintenance for the kiln.

As shown in Fig.2, the rotary kiln 1 equipped with such a lifter 7 is provided with an additional firing device 8 in the region of mid-passage of the material travel. Both feeding coal 8a and supplying fresh air simultaneously owing to the additional firing device induces spontaneous firing in the reducing atmosphere inside the kiln, which results in preventing the hot gas from decreasing in temperature and in promoting the preliminary reduction of the nickel oxide ore by roasting coal.

The additional firing device 8 is provided with an air supplying pipe 15 and a scoop feeder 14 which rotate with the shell 4, and it receives the coal 8a which is supplied from the coal feeder 16 having a trough near the shell as shown in Fig.5. All of the volatile matter and a part of free carbon included in the coal are burned out while the ore is heated and preliminarily reduced simultaneously. Even preliminary reduction, however, contributes to lightening the operational load on the electric furnace 17 shown in Fig.6. The carbon remained in the ore favorably turns into the pulverized coke which is required for reducing and melting calcined matter in an electric furnace. Burning coal raises the level of temperature in a hot zone inside the shell as shown by a double-dotted chain line indicated in Fig.2 much higher than the level of a low temperature zone distributed widely in a conventional kiln as shown by a single-dotted chain.

A scoop feeder 14 is a pipe structure as shown in Fig.5, extending in the direction of radius of the furnace and scooping the coal 8a in a trough 18 covering the lower half of the shell through the openings 14a outside of the shell. The amount of the coal 8a and the timing for charging the coal into the shell depend on the opening interval of valves 14v which are provided near the openings 14a. Shutting the valves prevents the coal stuck on the inner surface of the scoop feeder 14 from burning by the hot gas flowing through the opening 14b inside of the shell.

An air supplying pipe 15 is in communication with atmosphere, therefore a natural draft will be induced in the case that the pressure inside the shell is lower than the atmosphere, of course, fresh air can be also supplied by a forced draft fan 19 shown in Fig.2. Raising the level of temperature in the region of mid-passage of material travel by control of the degree of opening of valves in scoop feeders 14 and of valves, not shown, provided in the air supplying pipe 15, maintains the combustion gas in the region near the port for discharging calcined matter at high temperature.

The calcined nickel oxide ore is successively charged into the electric furnace 17 for melting and reducing. The present invention does not propose a new structure and/or operation of an electric furnace, and therefore, an explanation of the furnace is omitted here. As shown in Fig. 6, the gas purifier 21 is usually accompanied with a rotary kiln 1 in order to process the gas exhausted therefrom. The hot gas generated by a burner 3 is drawn by an induced draft fan 22 so as to be led to a dust collector 23 for collecting minute dust floating in the exhaust gas.

A bag filter is currently used as a dust collector, of which the bag is made of cloth so that the temperature of exhaust gas to be purified should be below the allowable temperature of the bag. In the case of a dry type dust collector such as a bag filter, the exhaust gas has to be over 100°C so as not to dew, but should be below 250 °C so as not to burn the bags in a collector.

The operation according to the rotary kiln mentioned above is as follows; Referring to Fig.2, wet nickel oxide ore 2 is charged into the cylindrical shell 4 slightly inclined through a shoot 24, being not only dried and preheated in contact with hot gas but calcined enough to be charged into an electric furnace while traveling the whole of the rotating shell.

The burner 3 provided in the most downstream part of material travel inside the cylindrical shell 4 generates hot gas by flames of over 1,000°C. The nickel oxide ore 2 which is already dried, preheated and preliminary reduced is calcined by thermal radiation of the flames as well as by conduction of heat in contact with hot gas. The calcined ore 2A is transferred to the electric furnace through a shoot 25. The hot gas decreasing in temperature in contact with the ore is drawn toward the port for charging raw material by the induced draft fan. Both coal and fresh air required for roasting the coal are supplied to the hot gas reaching the midstream of the ore travel by the additional firing device 8.

The hot gas that has already decreased a little in temperature is reheated by burning of the coal 8a, and simultaneously, the reducing atmosphere of high temperature generated there promotes the preliminary reduction and the initial calcination of the ore 2. Fig.7 is a diagram showing one example of temperature distribution in the case where - see a shadowed area 26 - a lifter which is 10 meters away from the port for charging raw material occupies the region of 5 meters in length. The lower two lines show the temperature distribution measured in the case of a kiln without a lifter as well as an additional firing device, and the upper two lines show that of a kiln according to the present invention.

The concrete example of a kiln without lifter and additional firing device is as follows: In the case that the feeding speed for charging ore was 100t/hr, the temperature in the mid-passage of material travel was 600°C, the maximum temperature in a kiln was 850°C and the temperature of the calcined ore discharged was 750°C, then, it was recognized that the temperature of the exhaust gas was 250°C and the reduction efficiency of the calcined nickel ore was at most 25%. The example according to the invention is as follows: In spite of the fact that the feeding speed for charging ore was increased up to 150t/hr, the temperature in the mid-passage of material travel was 800°C, the maximum temperature in a kiln was 1,060°C and the temperature of the calcined ore discharged was 1,000°C, then, it was recognized that the temperature of the exhaust gas came down to 215°C and the reduction efficiency of the calcined nickel ore reached 50% to favorably practice the stable operation of both an electric furnace and a bag filter.

Fig.7 teaches that the level of temperature in the example according to the present invention is much higher than that in the example according to a kiln without a lifter and additional firing device. It is noted that the raw material drastically increases in temperature around the lifter and the exhaust gas favorably decreases in temperature there.

. The hot gas reaching the lifter 7 equipped in the upstream region of material travel passes through both inner cell 12 and outer cells 13. As explained in Fig. 4 the radial plates 11 which carry the ore 2 in the direction of circumference of the shell accelerate the agitation of raw material in cooperation with the tangential plates which are away from the center of the shell by over one sixth of the radius thereof.

The ore agitated in the outer cells 13 is dried and preheated in contact with the hot gas passing therethrough. A part of the ore which is dried there is sieved into the inner cell 12 and/or the neighboring outer cells 13 through the holes of panels 10 and 11. The ore left in the original outer cells is more violently agitated and mixed with one another, resulting in being heated long with high efficiency of heat exchange. The ore which just passed through the lifter 7 travels toward the port for discharging calcined matter accompanied with a cascade motion shown in Fig.5. The exhaust gas which has passed through the lifter 7 is introduced into the dust collector 23 through an exhaust duct 27 (see Fig.6).

According to the lifter composing an inner cell and several outer cells, the rotary kiln results in having the outer cells which are away from the center of a shell and which convey the great majority of the ore, agitating the ore well in response to the rotation of the shell. Even wet ore may be not only prevented from sticking on the plates 10 and 11 with holes but activated violently. Improving the mixture and the agitation of the ore increases the opportunity of contact with the hot gas, resulting not only in promoting the efficiency of heat exchange in the zone for drying and preheating but in promoting the preliminary reduction and/or the calcination thereafter, consequently, high stability as well as high productivity are exhibited during the operation.

High efficiency of heat exchange makes the zone for drying and preheating short, thereby restraining the whole of kiln from enlarging in length. The decrease in temperature and amount of the exhaust gas after heat exchange either lightens the thermal load on a bag filter or allows the combustion gas to increase in temperature.
High calcination due to the increase in temperature of combustion gas generated by a burner helps to lighten the electric power load on an electric furnace and to decrease power consumption rate during the operation.

A rotary kiln disclosed above as a rotary device for heat exchange is widely used as an industrial machine. The lifter according to the invention is applicable not only to a rotary kiln for calcining nickel oxide ore but to one used in other technical fields, e.g., a kiln for making cement clinker and a kiln equipped in a plant for melting incinerated ash of refuse.

Fig.8 is a schematic view of the lifter 7A which is different from the first embodiment and in which scrapers 31 for scraping ore which are inclined to the axis 4a of the shell, are provided on the inlet for raw material of each outer cell, namely on the leading edge of each radial plate 11. They enable the ore to be scraped into the cells easily even if the columns obstruct the movements thereof. The space at the back of scraper provides a reservoir for accumulation of raw material just charged as a burden for next outer cell; accordingly, it comes to guide easily the raw material traveling toward both outer cells neighboring with each other.

Though not shown in figures, the radial plates may be inclined a little against the longitudinal axis 4a of the shell or be arced with a small curvature. In those cases, the ore can be transferred smoothly downstream inside the cell as long as the angle of attack of radial plates, regarded as, e.g., an airfoil, is assigned to a positive value against the direction of the whole of ore traveling along the longitudinal axis of the shell, which effect is to be seen as independent from removing the ore stagnating around the inlets of the outer cells as mentioned before.

Fig.9 includes two examples which are different from an example according to Fig.2 and which show a lifter which is arranged very close to the shoot, , e.g. approximately 10 meters apart from the shoot 24. These two examples are applicable to the kiln which heats raw material with a low percentage of water content, i.e., the raw material that need not a long region for evaporating water contained therein.

(a) is an example where an outlet of the shoot 24A is just faced to the inlet for charging raw material into the lifter 7, wherein the material 2a fallen from the shoot is directly fed into the outer cell 13M which has just returned to the lowest position in the direction of circumference of the shell 4. (b) is an example where the material 2a from a shoot 24B is directly fed into the outer cell 13N which has just returned to the highest position in the direction of circumference of the shell, wherein the dropped material may be scooped by an outer cell which returns to the lowest position.

As shown in Fig 9, the number of lifters equipped in the rotary kiln 1 is not necessarily one. (a) is an example where two lifters are installed in contact with each other, (b) is one where two lifters are installed with a little space between them. In the former, the material is agitated continuously in the region twice the span of the lifter. In the latter, the material having passed through the outer cells of the lifter 7M, which is not still dried sufficiently, is mixed with one already dried well, having passed through the inner cell of the first stage inside the lifter 7N of the second stage. The raw material already dried and preheated in the first lifter not only heats one insufficiently dried but facilitates to agitate raw material mixed with each other, resulting in improving the efficiency of heat exchange further.

Instead of the lifter fixed to the shell directly by welding work, as mentioned before, a lifter with a carriage mounted on the end of the columns thereof for inserting into the cylindrical shell is also usable as a lifter according to the invention. In Fig. 10 showing a lifter 7B with carriage drawn by omitting the columns thereof, similarly to Fig.1, skids 32B forming the carriage are fixed on frames, not drawn, for supporting radial plates 11. Fig.11 is another example of the lifter with a carriage, having a supporting drum 32C as a substitute for the skids.

Any of the lifters can be drawn out easily toward the charging side for raw material after removing the castable refractory which covers the carriage. The kiln becomes re-operable after both immovably installing a renewed lifter and covering the inner surface of the shell around the lifter with castable refractory. The used lifter is repaired for the next replacement.

Any inner cell of the lifters mentioned so far is octagonal in cross section, but the inner cell can be also assigned to another polygon, being selected corresponding to the number of outer cells required. Fig. 12 is an example of lifter 7D provided with triangular inner cell 12D. The numerals from 1 to 12 in small circles inside the outer cells 13D teach the order of change of behavior of raw material 2, wherein the material is agitated violently without sticking on the tangential plates 10D and/or the radial plates 11D due to the existence of the inner cell 12D.

Though the inner cell 12D has the corners being rather sharp, there is no trouble in raw material sticking on the tangential plates and/or in clogging the holes of panels since most of the raw material sieved thereinto is already dried. The inner cell may be circular like a cylindrical inner cell 12E shown in Fig.13, not necessarily polygonal. In this case, the number of outer cells 13E in the lifter 7E is changeable in response to the characteristic and quantity of raw material by using removable radial plates 11E.

Fig 14 shows two examples where either tangential plates or radial plates are made of panels with holes, wherein, (a) : The tangential plates 10 work as sieves and the radial plates 11F are only flat plates. (b): The radial plates 11 work as sieves and tangential plates 10G are just plates without holes. In the example of (b), inner cell 12G only brings outer cells 13G to circumferential area of the shell. The present invention is also applicable to the lifter provided with both outer cells and inner cell made of panels without holes because the material in outer cells has many opportunities of contact with hot gas, thus accomplishing the original purpose of the invention according to the existence of the inner cell.

A lifter shown in Fig.15(a) is provided with a conical cover 35 which is fixedly arranged to close the opening of an inner cell 12, thereby not only to guiding hot gas to outer cells 13 but also checking the gas flowing toward the inner cell. The cover 35 is applicable to the lifter explained in Fig.14(b), resulting in improving the efficiency of heat exchange inside outer cells 13 by transferring the gas, passing merely through the inner cell 12 without contribution of heat exchange, to outer cells, and in saving operational energy used for a kiln by decreasing the gas volume equivalent to the flow rate of gas passing through the inner cell.

A lifter shown in Fig.15(b) is provided with a set of movable conical blades 36 at the outlet for raw materia of the inner cell 12 so as to change the distribution of flow rate of hot gas flowing into both inner cell 12 and outer cells 13, resulting not only in increasing the flow rate of hot gas supplied to the outer cells 13 but in avoiding the oversupply of hot gas to the inner cell 12, wherein raw material has already dried and is only floating and/or precipitating.

Both the cover 35 and/or a set of movable conical blades 36 can change the distribution of flow rate of the hot gas flowing into cells in response to the characteristic of raw material in the case that they comprise several blades, of which the degree of opening is changeable as shown in the small figures drawn under the original figures respectively. In order to keep the degree of opening of blades, some hoops, not shown, may be used outside and/or inside thereof. The inner cell may be a conical cylinder which becomes gradually smaller in diameter along the direction of material travel as shown in Fig. 13, not necessarily a straight cylinder explained above, resulting in favorably quickening the travel of material inside outer cells 13E.

The present invention is applicable not only to rotary kilns but to rotary dryers, not shown, which are different from the rotary kiln already shown in Fig. 2 in that it is provided with a piping structure introducing hot gas generated in other equipment and/or gas exhausted from other device thereinto and that it is provided with neither a burner nor an additional firing device. Whatever can be fed through a shoot is acceptable as material to be dried, for instance, powder, grain or aggregate.
Plural lifters can be also installed intermittently in a rotary device, not necessarily near the port for charging material.

The lifter which has high efficiency of heat exchange contributes to shortening the length of a rotary dryer, and to saving the heat energy required for the operation and to lowering the fuel consumption rate. Of course, a burner may be also used in the dryer if an increase in the capacity for drying is desired. A rotary dryer is one of the industrial machines used widely in the stage of pre-treatment process in various plants, the present lifter can be also additionally installed easily to existing dryers in order to improve the current efficiency of heat exchange

The present invention is also applicable to rotary drums for recovering heat. A rotary drum 41 shown in Fig.16 is one example thereof, wherein hot slug 2S generated in metallic refinement furnace is charged into the rotary drum so as to recover the heat energy thereof. The slug 2S charged from a shoot 24 gives heat energy to the air flowing in the direction of arrow 38 from a pipe 37 for introducing air into the drum while traveling toward a shoot 25. One or several lifters 7 can be installed in the zone where they do not contact with the hot slug, namely near the pipe 37.

The air is preheated by the slug 2S rolling inside the lifters 7, being stirred up with the radial plates 11 of the lifters 7, rising gradually in temperature whenever it passes through a lifter. Since the air flowing in the direction of arrow 38 contacts with the slug increasing gradually in temperature, it becomes hot gas of, for instance, 500°C when reaching a duct 39 for recovering gas. Such hot gas is usable as heat source in various industries, therefore, a lifter according to the present invention is also very useful for recovering waste heat from hot shapeless matter.

## Claims

1. A lifter used in a rotary device for exchanging heat between raw material charged into a cylindrical shell (4) and hot gas passing through the rotating shell (4), comprising:
an inner cell (12) concentric with said shell, which has an opening at least equal to one sixth of the inner diameter of the shell at the inlet for raw material; and outer cells (13) formed by radial plates (11) dividing the space around the inner cell (12) in a circumferential direction of the shell;
so that the whole of the cells are disposed at a certain position in the direction of a longitudinal axis of said shell, wherein
the hot gas passes through both the inner cell and the outer cells toward the port for charging raw material in contact with each other while the raw material travels from the charging side to the discharging side through at least one of the outer cells (13); and
said inner cell (12) is formed by tangential plates (10) which are made of panels with holes for sieving a part of raw material in every outer cell into said inner cell.

2. A lifter according to claim 1, wherein said radial plates forming outer cells are made of panels with holes for sieving a part of the raw material in every outer cell into its neighboring outer cells.

3. A lifter according to claim 1 or 2, wherein every outer cell has a scraper inclined against the axis of the shell at an inlet for raw material.

4. A lifter according to any one of claims 1 to 3, further comprising a set of carriage mounted thereon so as to allow the lifter assembly to slide into said cylindrical shell.

5. A lifter according to any one of claims 1 to 4, further comprising a cover for closing the opening of said inner cell to guide the whole of the hot gas into said outer cells.

6. A lifter according to any one of claims 1 to 4, further comprising a set of movable conical blades at an outlet for raw material of said inner cell to change the distribution of flow rate of the hot gas passing through both inner cell and outer cells.

7. A rotary device for heat exchanging with said lifter according to any one of claims 1 to 6.

8. A rotary device for heat exchanging according to claim 7, wherein said device is a rotary kiln.

9. A rotary device for heat exchanging according to claim 8, further comprising an additional firing device between said lifter and a kiln burner.

10. A rotary device for heat exchanging according to claim 7, wherein said device is a rotary dryer.

11. A rotary device for heat exchanging according to claim 7, wherein said device is a rotary drum for recovering heat energy.

12. Method of heat-treatment of nickel oxide ore so as to be dried, preheated and calcined wherein nickel oxide ore, which is of high percentage of water content, charged into a cylindrical shell (4) in contact with hot gas passing through a rotating shell while the ore travels from a charging side to a discharging one, comprising the steps of:
calcining said nickel oxide ore in contact with combustion gas generated by a burner provided near a port for discharging the calcined matter of the cylindrical shell; roasting carbonic material in contact with hot gas passing through the region of mid-passage not only to prevent the hot gas from decreasing in temperature but to make reducing atmosphere, resulting in heating and pre-reducing nickel oxide ore; and
drying and preheating nickel oxide ore in contact with hot gas reaching a downstream region of ore travel, wherein said nickel ore is moved in the direction of rotation of said cylindrical shell (4) by both tangential plates extending in the direction of longitudinal axis of the shell to form the periphery walls of an inner cell (12) concentric with the shell and radial plates (11) dividing the space around the inner cell in the direction of circumference of the shell to form outer cells.

13. Method of heat-treatment according to claim 12, further comprising the step of sieving a part of ore in every outer cell into an inner one through tangential plates made of panels with holes so as to dry quickly the ore left in the outer cell.

14. Method of heat-treatment according to claim 12 and 13, further comprising the step of sieving a part of ore in every outer cell into its neighboring outer cells through radial plates made of panels with holes so as to dry quickly the ore left in the outer cell.

## Patentansprüche

1. Heber, welcher in einer Drehvorrichtung zum Wärmeaustausch zwischen einem Rohmaterial, das einer zylindrischen Hülle (4) zugeführt wird, und einem heißen Gas, das die sich drehende Hülle (4) passiert, verwendet wird, mit:
einer zu dieser Hülle konzentrischen Innenzelle (12) mit einer Öffnung von wenigstens einem Sechstel des Innendurchmessers der Hülle an dem Einlass für das Rohmaterial, und
Außenzellen (13), welche durch radiale Platten (11) gebildet werden, die den Raum und die Innenzelle (12) in Umfangsrichtung der Hülle teilen,
so dass alle Zellen in Richtung einer Längsachse der Hülle an einer bestimmten Position angeordnet sind, wobei
das heiße Gas sowohl die Innenzelle als auch die Außenzelle in Richtung der Zuführöffnung des Rohmaterials passiert und dabei in Kontakt mit dem Rohmaterial ist, während dieses von der Ein- zur Auslassseite durch wenigstens eine der Außenzellen (13) wandert; und
die Innenzelle (12) durch tangentiale Platten (10) gebildet wird, welche aus Lochplatten bestehen, um einen Teil des Rohmaterials in jeder Außenzelle in die Innenzelle zu sieben.

2. Heber gemäß Anspruch 1, wobei die die Außenzellen bildenden radialen Platten aus Lochplatten bestehen, um einen Teil des Rohmaterials in jeder Außenzelle in deren benachbarten Außenzellen zu sieben.

3. Heber gemäß Anspruch 1 oder 2, wobei jede Außenzelle an einem Einlass für das Rohmaterial einen gegenüber der Achse der Hülle geneigten Abstreifer hat.

4. Heber gemäß einem der Ansprüche 1 bis 3, welcher ferner einen Satz von daran montierten Gleitern aufweist, so dass die Hebeanordnung in die zylindrische Hülle gleiten kann.

5. Heber gemäß einem der Ansprüche 1 bis 4, welcher ferner eine Abdeckung zum Schließen der Öffnung der Innenzelle aufweist, um das gesamte heiße Gas in die Außenzellen zu leiten.

6. Heber gemäß einem der Ansprüche 1 bis 4, welcher ferner einen Satz von beweglichen konischen Platten an einem Rohmaterialauslass der Innenzelle aufweist, um die Strömungsratenaufteilung des durch die Innen- und Außenzellen passierenden heißen Gases zu verändern.

7. Drehvorrichtung zum Wärmeaustausch mit dem Heber gemäß einem der Ansprüche 1 bis 6.

8. Drehvorrichtung zum Wärmeaustausch gemäß Anspruch 7, wobei die Vorrichtung ein Drehofen ist.

9. Drehvorrichtung zum Wärmeaustausch gemäß Anspruch 8, welche ferner eine zusätzliche Feuerungsvorrichtung zwischen dem Heber und einem Drehofenbrenner aufweist.

10. Drehvorrichtung zum Wärmeaustausch gemäß Anspruch 7, wobei die Vorrichtung ein Drehtrockner ist.

11. Drehvorrichtung zum Wärmeaustausch gemäß Anspruch 7, wobei die Vorrichtung eine Drehtrommel zur Wärmeenergie-Rückgewinnung ist.

12. Wärmebehandlungsverfahren von zu trocknendem, vorzuheizendem und zu kalzinierendem Nickeloxiderz, wobei Nickeloxiderz, welches einen hohen Wasseranteil aufweist, einer zylindrischen Hülle (4) zugeführt wird und mit heißem Gas in Kontakt kommt, welches eines rotierende Hülle passiert, während das Erz von einer Einlass- zu einer Auslassseite wandert, mit den Schritten:
Kalzinieren des Nickeloxiderzes, welches mit einem von einem Brenner erzeugten Verbrennungsgas in Kontakt kommt, der nahe einer Auslassöffnung für das kalzinierte Material der zylindrischen Hülle vorgesehen ist;
Glühen von kohlenstoffhaltigem Material, welches mit dem den Bereich des Mitteldurchgangs passierenden heißen Gas in Kontakt kommt, um nicht nur zu verhindern, dass das heiße Gas abkühlt, sondern auch um eine reduzierte Atmosphäre zu schaffen, was zur Erwärmung und Vorreduzierung des Nickeloxiderzes führt; und
Trocknen und Vorheizen des Nickeloxiderzes, welches mit dem einen stromabwärtigen Bereich der Erzstrecke erreichenden heißen Gas in Kontakt kommt, wobei das Nickelerz sowohl durch die in Richtung der Längsachse der Hülle sich erstreckenden tangentialen Platten, um die Umfangswände einer zu dieser Hülle konzentrischen Innenzelle (12) zu bilden, als auch durch Radialplatten (11), welche den Raum um die Innenzelle zur Bildung von Außenzellen in Umfangsrichtung der Hülle teilen, in Drehrichtung der zylindrischen Hülle (4) bewegt wird.

13. Wärmebehandlungsverfahren gemäß Anspruch 12, welches ferner den Schritt aufweist:
Sieben eines Teils des Erzes in jeder Außenzelle durch aus Lochplatten bestehende tangentiale Platten in eine Innenzelle, um das in der Außenzelle übrige Erz schnell zu trocken.

14. Wärmebehandlungsverfahren gemäß Anspruch 12 und 13, welches ferner den Schritt aufweist:
Sieben eines Teils des Erzes in jeder Außenzelle durch aus Lochplatten bestehende Radialplatten in deren benachbarten Außenzellen, um das in der Außenzelle übrige Erz schnell zu trocknen.

## Revendications

1. Dispositif de levage utilisé dans un dispositif rotatif pour échanger de la chaleur entre un matériau brut chargé dans une carcasse cylindrique (4) et un gaz chaud passant à travers la carcasse rotative (4), comprenant :
une cellule intérieure (12) concentrique avec ladite carcasse, qui possède une ouverture au moins égale à un sixième du diamètre intérieur de la carcasse à l'entrée pour le matériau brut ; et
des cellules extérieures (13) formées par des plaques radiales (11) divisant l'espace autour de la cellule intérieure (12) dans une direction circonférentielle de la carcasse ;
de sorte que la totalité des cellules soit disposée dans une certaine position dans la direction d'un axe longitudinal de ladite carcasse, dans lequel
le gaz chaud passe à travers la cellule intérieure et les cellules extérieures vers l'orifice pour charger le matériau brut, en contact l'un avec l'autre, lorsque le matériau brut se déplace du côté de chargeur au côté déchargeur à travers au moins une des cellules extérieures (13) ; et
ladite cellule intérieure (12) est formée par des plaques tangentielles (10) qui sont faites de panneaux avec des trous pour cribler une partie du matériau brut dans chaque cellule extérieure jusque dans ladite cellule intérieure.

2. Dispositif de levage selon la revendication 1, dans lequel lesdites plaques radiales formant les cellules extérieures sont faites de panneaux avec des trous pour cribler une partie du matériau brut dans chaque cellule extérieure jusque dans ses cellules extérieures voisines.

3. Dispositif de levage selon la revendication 1 ou 2, dans lequel chaque cellule extérieure possède un racloir incliné contre l'axe de la carcasse à une entrée pour le matériau brut.

4. Dispositif de levage selon l'une quelconque des revendications 1 à 3, comprenant en outre un jeu de chariots monté sur celui-ci afin de permettre à l'ensemble de dispositif de levage de coulisser dans ladite carcasse cylindrique.

5. Dispositif de levage selon l'une quelconque des revendications 1 à 4, comprenant en outre un couvercle pour fermer l'ouverture de ladite cellule intérieure pour guider la totalité du gaz chaud dans lesdites cellules extérieures.

6. Dispositif de levage selon l'une quelconque des revendications 1 à 4, comprenant en outre un jeu d'aubes coniques mobiles à une sortie pour le matériau brut de ladite cellule intérieure pour changer la distribution du débit du gaz chaud passant à travers la cellule intérieure et à travers les cellules extérieures.

7. Dispositif rotatif pour échanger de la chaleur avec ledit dispositif de levage selon l'une quelconque des revendications 1 à 6.

8. Dispositif rotatif pour échanger de la chaleur selon la revendication 7, dans lequel ledit dispositif est un four rotatif.

9. Dispositif rotatif pour échanger de la chaleur selon la revendication 8, comprenant en outre un dispositif de chauffage supplémentaire entre ledit dispositif de levage et un brûleur de four.

10. Dispositif rotatif pour échanger de la chaleur selon la revendication 7, dans lequel ledit dispositif est un sécheur rotatif.

11. Dispositif rotatif pour échanger de la chaleur selon la revendication 7, dans lequel ledit dispositif est un tambour rotatif pour récupérer de l'énergie thermique.

12. Procédé de traitement thermique de minerai d'oxyde de nickel afin d'être séché, préchauffé et calciné, dans lequel le minerai d'oxyde de nickel, dont la teneur en eau est de pourcentage élevé, est chargé dans une carcasse cylindrique (4) en contact avec un gaz chaud passant à travers une carcasse rotative lorsque le minerai se déplace d'un côté chargeur à un côté déchargeur, comprenant les étapes consistant à :
calciner ledit minerai d'oxyde de nickel en contact avec un gaz de combustion généré par un brûleur prévu près d'un orifice pour décharger la matière calcinée de la carcasse cylindrique ;
calciner un matériau carbonique en contact avec un gaz chaud passant à travers la région de mi-passage, non seulement pour empêcher la température du gaz chaud de diminuer mais pour obtenir une atmosphère réductrice, entraînant un chauffage et une réduction préalable du minerai d'oxyde de nickel ; et
sécher et préchauffer le minerai d'oxyde de nickel en contact avec le gaz chaud atteignant une région aval de déplacement du minerai, dans lequel ledit minerai de nickel est déplacé dans la direction de rotation de ladite carcasse cylindrique (4) par des plaques tangentielles s'étendant dans la direction de l'axe longitudinal de la carcasse pour former les parois périphériques d'une cellule intérieure (12) concentrique avec la carcasse et par des plaques radiales (11) divisant l'espace autour de la cellule intérieure dans la direction de circonférence de la carcasse pour former des cellules extérieures.

13. Procédé de traitement thermique selon la revendication 12, comprenant en outre l'étape consistant à cribler une partie du minerai dans chaque cellule extérieure jusque dans une cellule intérieure à travers des plaques tangentielles faites de panneaux avec des trous afin de faire sécher rapidement le minerai restant dans la cellule extérieure.

14. Procédé de traitement thermique selon la revendication 12 et 13, comprenant en outre l'étape consistant à cribler une partie du minerai dans chaque cellule extérieure jusque dans ses cellules extérieures voisines à travers des plaques radiales faites de panneaux avec des trous afin de faire sécher rapidement le minerai restant dans la cellule extérieure.
